# FASCICULE DE BREVET EUROPEEN

(11) **EP 2 663 793 B1**
(45) Date de publication et mention de la délivrance du brevet: **22.04.2015**
(21) Numéro de dépôt: 12702585.6
(22) Date de dépôt: 05.01.2012
(51) Int. Cl.: F16K 1/30, F16L 37/16, F16L 37/44, F17C 13/04

(54) **RESERVOIR DE FLUIDE SOUS PRESSION COMPRENANT UN DISPOSITIF DE CONTROLE D'UN FLUX DE GAZ**
UNTER DRUCK STEHENDER FLÜSSIGKEITSBEHÄLTER MIT EINER VORRICHTUNG ZUR STEUERUNG EINES GASSTROMS
PRESSURISED FLUID TANK INCLUDING A DEVICE FOR CONTROLLING A GAS STREAM

(30) Priorité: 12.01.2011 FR 1150239
(43) Date de publication de la demande: 20.11.2013
(73) Titulaire: L'Air Liquide Société Anonyme pour l'Etude et l'Exploitation des Procédés Georges Claude, 75007 Paris (FR)
(72) Inventeur: BAUNE, Emmanuel, F-95160 Montmorency (FR); DESCLIDES, Michael, F-85000 La Roche Sur Yon (FR); LIGONESCHE, Renaud, F-95220 Herblay (FR); MANSCOURT, Cyril, 92170 Vanves (FR); FRENAL, Antoine, F-95460 Ezanville (FR); PISOT, Philippe, F-38140 Apprieu (FR)
(74) Mandataire: De Cuenca, Emmanuel Jaime
(86) Numéro de dépôt international: PCT/FR2012/050025
(87) Numéro de publication internationale: WO 2012/098318

(56) Documents cités:
- EP-A1- 0 150 236
- EP-B1- 1 243 823
- US-A- 3 330 299
- US-A- 3 502 298
- US-B1- 6 298 876

## Description

La présente invention concerne un ensemble de réservoir de gaz sous pression comprenant un dispositif de contrôle d'un flux de gaz.

L'invention concerne plus particulièrement un ensemble de réservoir de gaz sous pression comprenant un dispositif dé contrôle d'un flux de gaz, notamment pour une bouteille de gaz sous pression, comprenant un robinet définissant un circuit interne de gaz entre une première extrémité destinée à être reliée à l'ouverture du réservoir de gaz sous pression et une seconde extrémité destinée à être raccordée à un organe utilisateur ou à un bloc fonctionnel de contrôle du flux de gaz, le robinet comprenant un détendeur de pression à une valeur fixe ou réglable, un circuit de remplissage, un clapet d'obturation sélective du circuit de gaz et un organe de manoeuvre monté pivotant sur le robinet pour commander sélectivement l'ouverture du clapet d'obturation, le dispositif comprenant un bloc fonctionnel sélectivement connectable à la seconde extrémité du robinet, le bloc fonctionnel comprenant un passage, de gaz interne, le passage interne du bloc fonctionnel comprenant une extrémité amont destinée à être raccordée fluidiquement avec la seconde extrémité du circuit de gaz du robinet,
- le bloc comprenant au moins l'un des organes de contrôle de flux de gaz parmi : un détendeur de pression à valeur fixe ou réglable, un clapet (vanne d'isolement), un régulateur de débit fixe ou réglable.

Les bouteilles de gaz industriels se répartissent en deux types principaux : les bouteilles munies d'un simple robinet d`ouverture/fermeture et les bouteilles munies d'un système à robinet-détenteur intégré dans leur tête.

A la sortie de fluide d'un simple robinet d'ouverture/fermeture, la pression du fluide soutiré est égale à la pression du fluide dans la bouteille. C'est-à-dire qu'aucun système de détente n'est intégré dans ce cas à la bouteille. Pour disposer de fluide à une pression d'utilisation plus basse, l'utilisateur doit avoir recours à un détendeur connecté à la sortie du robinet, pour passer de la haute pression contenue dans la bouteille à la pression détendue d'utilisation.

Pour les bouteilles munies d'un système à robinet-détenteur intégré dans leur tête, le gaz à la sortie du robinet est dans ce cas à une pression d'utilisation inférieure à celle régnant dans la bouteille.

Le document EP1243823B1 décrit un robinet à détente intégrée ayant un dispositif d'arrêt d'urgence, montée sur bouteille de gaz, avec tête mobile comportant un axe et une came coopérant tous deux sous l'effet d'une pression manuelle de l'opérateur sur la tête.

L'invention vise à proposer un ensemble de réservoir de gaz sous pression comprenant un dispositif comprenant un robinet et un bloc fonctionnel sélectivement connectable au robinet offrant une grande ergonomie et grande sécurité d'utilisation pour l'utilisateur.

A cette fin, le dispositif selon l'invention, par ailleurs conforme à la définition générique qu'en donne le préambule ci-dessus, est essentiellement caractérisé en ce que, lorsque le bloc fonctionnel est connecté à la seconde extrémité du robinet, l'organe de manoeuvre peut être pivoté manuellement entre une première position dans laquelle l'organe de manoeuvre ne coopère pas en accrochage avec le bloc fonctionnel et une seconde position dans laquelle l'organe de manoeuvre coopère mécaniquement en accrochage avec le bloc fonctionnel pour s'opposer à la séparation du bloc de la seconde extrémité du robinet, dans sa première position , l'organe de manoeuvre ne sollicitant pas le clapet d'obturation vers sa position d'ouverture.

L'invention peut ainsi s'appliquer notamment aux bouteilles de gaz industriels stockés sous forme comprimée utilisant un équipement connexe et amovible de détente qui vient se clipper par l'intermédiaire d'un raccord rapide sur la sortie de soutirage d'un robinet déjà monté sur la bouteille. Le robinet peut lui-même comprendre un système de pré-détente. C'est-à-dire que l'équipement amovible (bloc fonctionnel) peut réaliser une détente (partielle) du gaz en se connectant au robinet solidaire de la bouteille.

Par ailleurs, des modes de réalisation de l'invention peuvent comporter l'une ou plusieurs des caractéristiques suivantes :
- dans sa seconde position de verrouillage fermé, l'organe de manoeuvre ne sollicite pas le clapet d'obturation vers sa position d'ouverture,
- l'organe de manoeuvre comporte au moins un logement, ou, respectivement, au moins une saillie et le bloc fonctionnel comporte au moins une saillie, respectivement au moins un logement, les saillie(s) et logement(s) étant destiné à coopérer sélectivement en accrochage selon la position de l'organe de manoeuvre par rapport au bloc,
- le au moins un logement comprend une découpe formant une rampe de guidage de la au moins une saillie,
- dans une variante envisageable, lorsque le bloc fonctionnel est connecté à la seconde extrémité du robinet, l'organe de manoeuvre peut être pivoté manuellement dans une troisième position dite « de verrouillage ouvert » dans laquelle l'organe de manoeuvre coopère mécaniquement en accrochage avec le bloc fonctionnel pour s'opposer à la séparation du bloc de la seconde extrémité du robinet, dans cette troisième position l'organe de manoeuvre actionnant le clapet d'obturation vers sa position d'ouverture,
- la seconde position de verrouillage fermé est située entre la première position de repos et la troisième position de verrouillage ouvert,
- l'organe de manoeuvre est sollicité par défaut vers sa première position de repos par un organe de rappel,
- lorsque le bloc fonctionnel est connecté à la seconde extrémité du robinet et que l'organe de manoeuvre est dans sa troisième position de verrouillage ouvert, un élément élastique porté par le robinet et/ou le bloc fonctionnel et/ou l'organe de manoeuvre assure un écartement déterminé du bloc fonctionnel par rapport au robinet permettant un déplacement limité déterminé du bloc fonctionnel par rapport au robinet, le déplacement manuel limité du bloc fonctionnel vers le robinet contre l'effort de l'élément élastique assurant le déplacement automatique l'organe de manoeuvre dans une position assurant la fermeture automatique du clapet d'obturation,
- le déplacement manuel limité du bloc fonctionnel vers le robinet contre l'effort de l'élément élastique provoque le retour automatique de l'organe de manoeuvre dans sa seconde position de verrouillage fermé,
- le dispositif comporte un bloc fonctionnel dont le passage interne comprend au moins un organe de contrôle d'un flux de gaz, le bloc fonctionnel étant connectable directement à la seconde extrémité du robinet,
- le dispositif comprend un bloc fonctionnel adaptateur comprenant une première extrémité connectable directement à la seconde extrémité du robinet et une seconde extrémité destinée à être raccordée à un appareil utilisateur et/ou à un bloc fonctionnel supplémentaire dont le passage interne comprend au moins un organe de contrôle d'un flux de gaz, c'est-à-dire que le bloc fonctionnel supplémentaire est connectable indirectement à la seconde extrémité du robinet via le bloc fonctionnel adaptateur,
- l'organe de manoeuvre coopère sélectivement en accrochage mécanique avec le bloc fonctionnel adaptateur et/ou avec le bloc fonctionnel supplémentaire,
- le clapet d'obturation comprend un élément mobile sollicité vers une position fermée contre un siège fixe via un organe de rappel tel qu'un ressort,
- l'organe de manoeuvre comprend une portion d'actionnement sélectif de l'élément mobile du clapet directement et/ou indirectement via une pièce mobile de transmission d'effort,
- l'organe de manoeuvre comprend un levier articulé sur le corps du robinet,
- l'organe de manoeuvre comprend une ou deux rainures de guidage destinées à accueillir chacune au moins un axe fixe du bloc fonctionnel,
- l'écartement déterminé du bloc fonctionnel par rapport au robinet permettant un déplacement limité déterminé du bloc fonctionnel par rapport au robinet est réalisé par l'un au moins parmi, un joint, une pièce élastique, la pression du gaz issu de la seconde extrémité du robinet et entrant dans l'extrémité amont du bloc fonctionnel,
- le robinet comprend au moins parmi : un clapet (vanne d'isolement), un régulateur de débit fixe ou réglable, un clapet de pression résiduelle,
- l'organe de manoeuvre comporte deux saillies chacune en forme de crochet et le bloc fonctionnel comporte deux logements destinés à accueillir respectivement les deux saillies en forme de crochet, chaque logement comprenant une zone d'attache sélective du crochet,
- le clapet d'obturation comprend un élément mobile sollicité vers une position fermée contre un siège fixe via un organe de rappel tel qu'un ressort,
- l'organe de manoeuvre comprend une portion d'actionnement sélectif de l'élément mobile du clapet directement et/ou indirectement via au moins une pièce mobile de transmission d'effort,
- l'organe de manoeuvre comprend une portion d'actionnement sélectif de l'élément mobile du clapet via un mécanisme de démultiplication de l'effort de l'organe de manoeuvre vers l'élément mobile du clapet,
- le mécanisme de démultiplication de l'effort de l'organe de manoeuvre comprend un pivot intermédiaire articulé d'une part sur l'organe de manoeuvre et, d'autre part, sur une came d'actionnement, la came d'actionnement étant articulée également sur le robinet et comprenant une extrémité formant une portion d'actionnement sélectif de l'élément mobile du clapet directement et/ou indirectement via au moins une pièce mobile de transmission d'effort,
- une première extrémité du pivot est articulée sur l'organe de manoeuvre via un premier axe d'articulation, les deux extrémités du premier axe d'articulation étant solidaires respectivement d'une première platine et d'une seconde platine dont au moins la première platine est solidaire de l'organe de manoeuvre, la première extrémité du pivot étant articulé sur le premier axe d'articulation entre lesdites platines,
- une seconde extrémité du pivot est articulée sur la came d'actionnement via un second axe d'articulation solidaire de la came, le second axe d'articulation étant monté entre deux flasques parallèles de la came, les deux flasques définissant un logement dans laquelle est logée la seconde extrémité du pivot,
- l'organe de manoeuvre comprend un levier articulé sur le corps du robinet,
- l'organe de manoeuvre est sollicité par défaut vers sa première position par un organe de rappel.

L'invention peut concerner également tout dispositif ou procédé alternatif comprenant toute combinaison des caractéristiques ci-dessus ou ci-dessous.

Cet équipement connexe (bloc fonctionnel) peut ainsi être doté d'une fonction semi-automatique de coupure d'urgence du flux de gaz par la connexion et un actionnement par pression de ce bloc fonctionnel.

Le dispositif peut en particulier comprendre un bloc de détente à connecter sur le corps d'un robinet réalisant un premier étage de détente du gaz de la bouteille.

Le dispositif peut ainsi comporter l'un ou plusieurs parmi :
- un système de réglage de débit et de pression,
- des fonctions d'ergonomie et de communication,
- une sécurisation de l'ensemble par un cryptage spécifique au montage du bloc fonctionnel sur le robinet, par exemple selon la nature du gaz, selon le débit ou selon la pression visée pour l'application,
- un système d'arrêt d'urgence du gaz à actionnement externe.

L'invention propose en particulier un bloc fonctionnel se raccordant sélectivement, de préférence via une connexion rapide, à la sortie de gaz d'un robinet monté sur une bouteille de gaz sous pression.

D'autres particularités et avantages apparaîtront à la lecture de la description ci-après, faite en référence aux figures dans lesquelles :
- la figure 1 représente une vue schématique et partielle illustrant la structure et le fonctionnement d'un exemple de dispositif de contrôle de gaz selon l'invention dans laquelle un bloc fonctionnel est détaché du robinet,
- la figure 2 représente le dispositif de contrôle de gaz de la figure 1 dans laquelle le bloc fonctionnel est connecté au robinet mais le levier est en position dite « de repos »,
- la figure 3 représente le dispositif de contrôle de gaz de la figure 1 dans laquelle le bloc fonctionnel est connecté au robinet et le levier est en position dite « de verrouillage ouvert »,
- la figure 4 représente une vue en perspective d'un exemple de réalisation d'un robinet selon l'invention,
- la figure 5 représente une vue en perspective du robinet de la figure 4 sur lequel est monté un bloc fonctionnel,
- la figure 6 représente une vue en coupe, schématique et partielle de l'ensemble de la figure 5,
- la figure 7 représente une vue en coupe, schématique et partielle d'un détail de la figure 6 illustrant un exemple d'actionnement du clapet par le levier,
- les figures 8 à 12 représentent de manière schématique et partielle un détail du dispositif illustrant l'état d'accrochage entre le levier du robinet et un axe du bloc fonctionnel selon différentes positions relatives,
- les figures 13 et 14 représentent de manière schématique et partielle une vue en coupe d'un détail du dispositif illustrant deux positions possibles autorisées par le débattement élastique du bloc fonctionnel par rapport au robinet,
- la figure 15 représente schématiquement et de façon partielle une vue de côté illustrant la structure et le fonctionnement d'un autre exemple de dispositif de contrôle selon l'invention dans laquelle le robinet est monté sur un réservoir et le bloc fonctionnel est détaché du robinet,
- la figure 16 représente une vue en perspective du robinet de la figure 15,
- la figure 17 représente une vue analogue à celle de la figure 15 dans laquelle le bloc fonctionnel est monté sur le robinet et le levier est dans une première position,
- la figure 18 représente une vue en perspective du dispositif de contrôle de la figure 17,
- la figure 19 représente une vue analogue à celle de la figure 16 dans laquelle le levier est dans une seconde position,
- la figure 20 représente une vue en perspective du dispositif de contrôle de la figure 19.

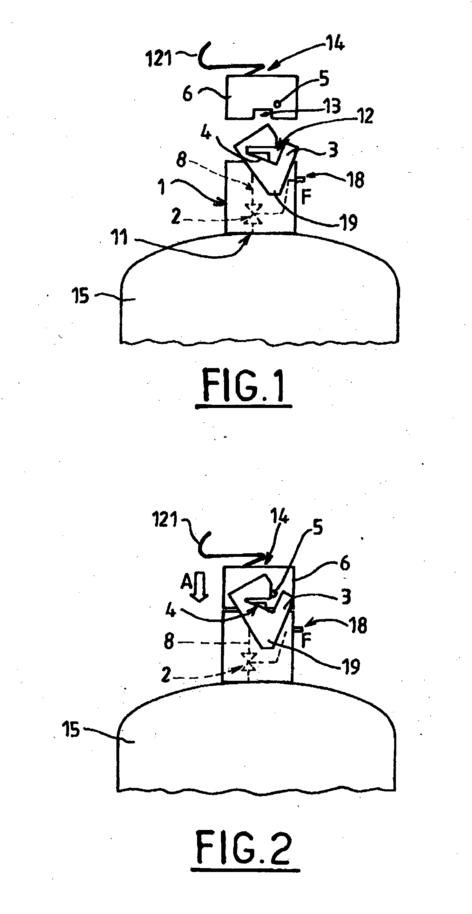

En se référant à la figure 1, le dispositif de contrôle d'un flux de gaz comprend un robinet 1 monté dans l'orifice d'une bouteille 15 de gaz sous pression. Classiquement, la base du robinet 1 peut comporter une portion filetée qui vient se visser dans l'orifice taraudé d'un réservoir.

Le robinet 1 définit classiquement un circuit 8 interne de gaz entre une première extrémité 11 raccordée à l'ouverture d'un réservoir 15 et une seconde extrémité 12 de sortie de gaz destinée à être raccordée à un organe utilisateur ou à un bloc 6 fonctionnel de contrôle du flux de gaz décrit ci-après.

La seconde extrémité 12 est par exemple pourvue d'un raccord de connexion, mâle ou femelle, de préférence de type à connexion rapide ou semi-rapide, qui permet la connexion du robinet 1 avec un bloc 6 fonctionnel ou un circuit utilisateur comprenant un raccord conjugué (ou via un adaptateur).

Le robinet 1 comprend un détendeur de pression à valeur fixe ou réglable, un clapet (vanne d'isolement) et un circuit de remplissage et peut intégrer au moins l'un parmi : un régulateur de débit fixe ou réglable, un clapet de pression résiduelle, un manomètre, au moins un organe de sécurité (soupape, fusible thermique, disque de rupture...) et/ou tout autre dispositif fonctionnel connu.

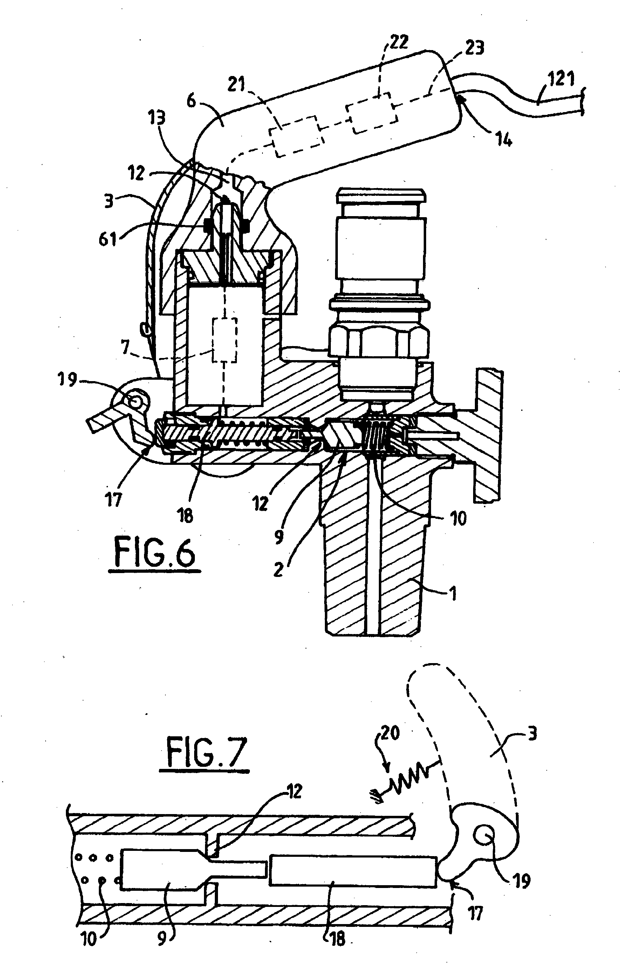

Par exemple, le robinet 1 comprend un détendeur de pression réalisant une première détente du gaz depuis la pression de service de la bouteille Pb jusqu'à une valeur déterminée Pc avec Pc < Pd. Par exemple, le robinet 1 comprend un détendeur de pression (cf. la représentation schématique et simplifiée portant la référence 7 à la figure 6) qui abaisse la haute pression du gaz (par exemple comprise entre 350 et 800bar) à une valeur fixe ou réglable comprise entre 5 et 300 bar, de préférence entre 15 et 50 bar.

Via cette première détente, l'utilisateur peut utiliser le gaz ainsi détendu ou monter un détendeur supplémentaire à la sortie 12 du robinet 1 pour abaisser encore la pression du gaz à une valeur inférieure compatible avec son application. En particulier, la première détente du robinet 1 permet à l'utilisateur de monter un bloc de détente 6 apte à supporter la pression de gaz délivrée par le robinet 1 (des blocs fonctionnels ne supportent pas forcément la haute pression du gaz dans le réservoir 15).

Le robinet 1 comprend un clapet 2 d'obturation sélective du circuit 8 de gaz et un organe 3 de manoeuvre monté pivotant autour d'un axe 19 sur le robinet 1 pour commander sélectivement l'ouverture du clapet 2 d'obturation.

De préférence, un organe 20 de rappel tel qu'un ressort sollicite le levier 3 dans une position dans laquelle il n'actionne pas l'ouverture du clapet 2 d'obturation.

Par exemple, l'organe de manoeuvre comprend un levier 3 articulé sur le corps du robinet 1. Comme représenté aux figures 6 et 7, le clapet 2 d'obturation peut comporter un élément 9 mobile sollicité vers une position fermée contre un siège 12 fixe via un organe 10 de rappel tel qu'un ressort.

Lors d'une rotation déterminée du levier 3, ce dernier vient actionner mécaniquement l'élément 9 mobile du clapet 2 pour ouvrir le circuit 8 du robinet 1.

Par exemple, comme visible à la figure 6, le levier 3 comprend une surface de came 17 qui vient actionner mécaniquement l'élément 9 mobile du clapet 2 directement ou indirectement via au moins une pièce 18 telle une gâche mobile dans le corps du robinet 1 qui assure la transmission d'effort entre le levier 3 et l'organe clapet 9.

Le dispositif comprend un bloc 6 fonctionnel, par exemple formant un second étage de détente de pression, qui est sélectivement connectable à la seconde extrémité 12 du robinet 1.

Le bloc 6 fonctionnel comprend un conduit 23 ou passage interne de gaz comprenant une extrémité amont 13 destinée à être raccordée fluidiquement avec la seconde extrémité 12 (la sortie) du circuit 8 de gaz du robinet 1 et une extrémité aval 14 destinée à être raccordée à un appareil utilisateur du gaz, ou à un réseau de gaz ou à un autre bloc fonctionnel.

Selon une particularité avantageuse, le bloc 6 fonctionnel est connecté à la seconde extrémité 12 du robinet 1, le levier 3 peut être pivoté manuellement entre une première position stable dite « de repos » dans laquelle le levier 3 ne coopère pas en accrochage avec le bloc 6 fonctionnel et une autre position stable dite « de verrouillage fermé » dans laquelle le levier 3 coopère mécaniquement en accrochage avec le bloc 6 fonctionnel pour s'opposer à la séparation du bloc 6 de la seconde extrémité 12 du robinet.

Par « stable » on désigne une position qui laisse le levier 3 en place lorsque l'opérateur relâche ce dernier.

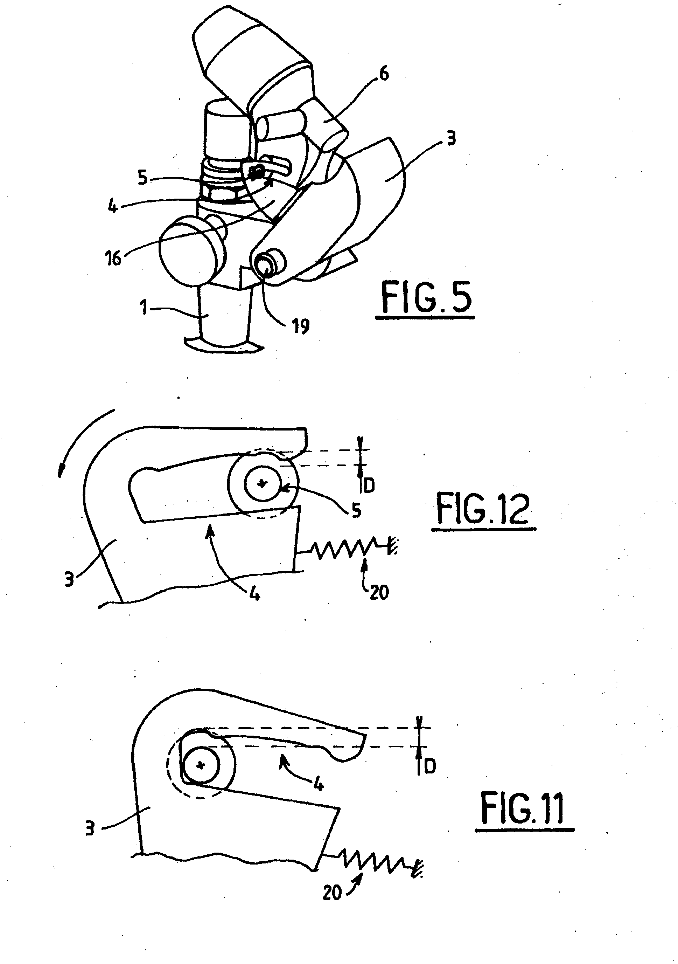

A cet effet, le levier 3 comporte au moins un logement 4 et de préférence deux logements 4 et le bloc 6 fonctionnel comporte des saillies 5 correspondantes, les saillies 5 et logements 4 étant destiné à coopérer en accrochage selon la position du levier 3. Comme représenté à la figure 5, le levier 3 peut comporter deux parois 16 parallèles espacées munies chacune d'un logement 4 en forme de rainure ouverte à une extrémité. Une saille 5 peut être admise et guidée dans chaque rainure 4.

Le levier 3 permet donc à la fois :
- la commande de l'ouverture du clapet 2 d'obturation du circuit 8 de soutirage du robinet 1,
- le verrouillage mécanique du bloc 6 fonctionnel sur le robinet 1.

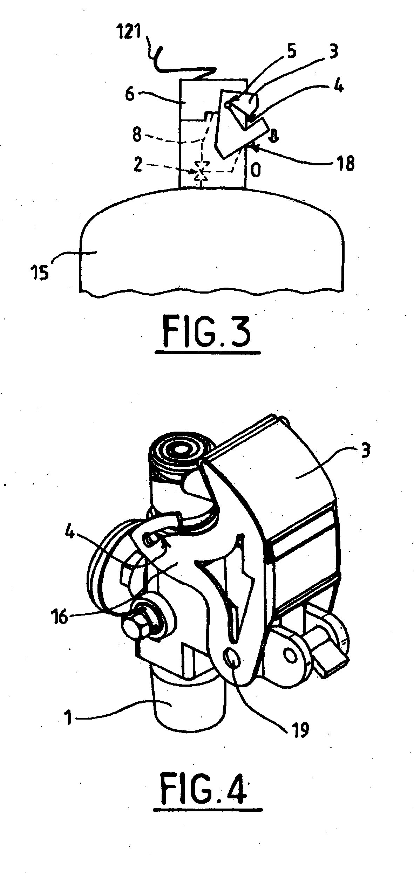

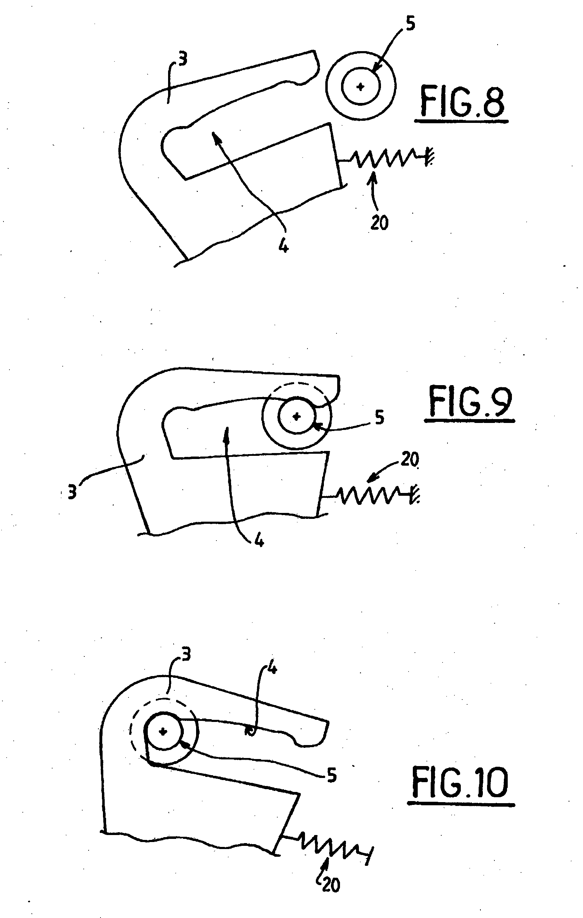

En se référant à la figure 1, le module 6 fonctionnel, qui est relié à un tuyau 121 utilisateur, est en position détachée du robinet 1. Le levier 3 du robinet 1 est dans une position stable inactive dans laquelle il n'actionne pas le clapet 2 d'obturation. Le clapet 2 d'obturation est dans en position fermée « F », le gaz de la bouteille 15 n'est pas autorisé à sortir via la seconde extrémité 12. Dans cette position, comme représenté à la figure 8, les axes 5 du bloc 6 ne sont pas logés dans les rainures 4 du levier 3. Comme visible aux figures 1 et 4, de préférence, dans cette position le levier 3 forme un écran de protection pour le raccord de sortie 12 du robinet 1 protégeant cette sortie de fluide des pollutions extérieures.

De préférence, dans cette position stable inactive le levier 3 protège la seconde extrémité 12 du robinet 1 contre les chocs et/ou contre les pollutions.

Sur la représentation de la figure 2 le bloc 6 fonctionnel est connecté mécaniquement sur le robinet 1 (l'extrémité amont 13 du bloc 6 est engagée par exemple manuellement sur la seconde extrémité 12 du robinet 1 selon la direction A). Dans cette première position dite « de repos », l'organe 3 de manoeuvre ne coopère pas en accrochage avec le bloc 6 fonctionnel c'est-à-dire que les axes 5 ne sont pas accrochés rigidement par les rainures 4 du levier 3. Le clapet 2 d'obturation du robinet 1 reste en position fermée. A partir de cette position, l'utilisateur peut pivoter le levier 3 pour faire pénétrer les axes 5 du bloc 6 fonctionnel à l'entrée des rainures 4 du levier 3 (rotation du levier 3 vers la droite aux figures 2 et 8). Dans cette position dite « de verrouillage fermé » le levier 3 coopère mécaniquement en accrochage avec les axes 5 du bloc 6 fonctionnel pour s'opposer à la séparation du bloc 6 de la seconde extrémité 12 du robinet 1. Cette position est de préférence stable et garantie par la forme de la surface 4 du levier 3 qui accueille l'axe 5, comme représenté par exemple schématiquement à la figuré 9.

A partir de cette position, pour ouvrir le clapet 2 d'obturation et libérer le gaz du robinet 1 vers le bloc 6 fonctionnel, l'utilisateur continue la rotation (vers la droite aux figures 2 et 9) et dispose les axes 5 du bloc 6 dans le fond des rainures 4 du levier 3. Les axes 5 viennent en butée dans les rainures 7 dans une position de préférence stable dite « de verrouillage ouvert ». Dans cette position illustrée aux figures 3 et 10, le levier 3 actionne l'ouverture du clapet 2 d'obturation (cf. « O » figure 3). C'est-à-dire qu'une partie du levier 3 ou une pièce 117 actionnée par le levier 3 sollicite l'élément 9 mobile du clapet 2. Le circuit 8 est alors ouvert.

De préférence l'indexation ou le verrouillage du bloc 6 sur le corps du robinet 1 est faite ainsi, grâce à un moyen d'ancrage des axes 5 dans la géométrie (rainures 4) du levier 3.

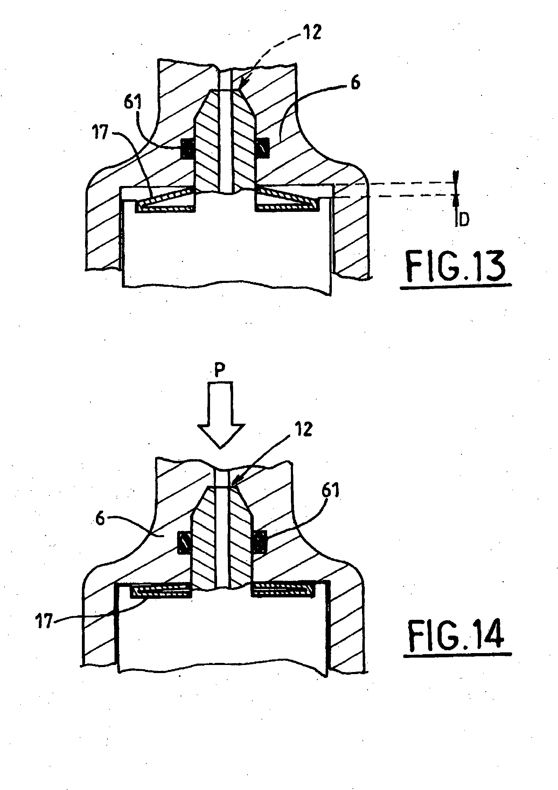

De préférence, lorsque le bloc 6 fonctionnel est connecté à la seconde extrémité 12 du robinet 1 et que le levier 1 est dans cette position de verrouillage ouvert, un élément 117 élastique assure un écartement déterminé du bloc 6 fonctionnel par rapport au robinet 1 permettant un déplacement limité déterminé du bloc 6 fonctionnel par rapport au robinet 1 (sous réserve de surpasser l'effort de l'élément 117 élastique). Par exemple, comme représenté à la figure 13, un joint 117 du type rondelle de Belleville ou autre porté par le robinet 1 maintient le bloc 6 fonctionnel légèrement écarté du corps du robinet 1 (espace D de l'ordre de 5 à 10 millimètres par exemple, cf. figure 13). Comme décrit ci-dessus, cet écartement est limité dans le sens de l'écartement des deux pièces 6, 1 par la coopération entre le levier 3 et le bloc 6 (cf. figure 10). Par ailleurs, un joint 61 peut être prévu pour assurer l'étanchéité entre la seconde extrémité 12 et le bloc 6 fonctionnel.

Cependant, lorsque l'opérateur vient presser le bloc 6 contre le robinet 1 (selon la flèche P de la figure 14), il déplace le bloc 6 vers le robinet 1 de façon limitée (d'une valeur au maximum de l'écartement D). C'est-à-dire que l'élément élastique 117 est comprimé. Le bloc 6 peut le cas échéant venir en butée contre le corps du robinet 1. Comme visible à la figure 11, ce déplacement limité va déplacer les axes 5 dans les rainures 4 du levier 3 (les axes 5 se déplacent transversalement aux directions longitudinales des rainures 4). Pendant ce déplacement D, le levier 3 n'est plus bloqué en rotation par les axes 5. Le levier 3 va donc automatiquement pivoter en sens inverse (cf. figure 12) sous l'action de son ressort 20 (cf. figures 6 et 11) vers une position dans laquelle le clapet 2 d'obturation n'est pas actionné vers sa position ouverte. C'est-à-dire que le levier 3 revient en position de verrouillage fermé de la figure 9.

Selon un cas particulier de l'invention, cette sollicitation manuelle provoquant la fermeture rapide du clapet 2 est particulièrement avantageuse en situation dangereuse. En effet, une simple pression ou un coup de poing sur le bloc 6 fonctionnel permet de refermer le clapet 2 du robinet 1.

On comprend donc que, tout en étant de structure simple, le dispositif possède de nombreuses fonctionnalités de sécurité et une très grande ergonomie.

En effet, la fonction possible de fermeture d'urgence du circuit 8 de gaz par l'actionnement vertical sur le bloc 6 fonctionnel amovible est très pratique et très simple pour un utilisateur.

Cette fermeture du circuit 8 de gaz à l'intérieur du corps du robinet 1 peut s'effectuer par un actionnement, par exemple vertical, du bloc 6. Cette commande intuitive peut le cas échéant être indiquée par une forme et/ou une signalétique ergonomique sur le bloc 6.

Le bloc 6 fonctionnel peut avantageusement comporter une fonction de régulation de débit et/ou de régulation de pression suivant le gaz et le type d'application.

Le bloc 6 fonctionnel peut avantageusement comporter une fonction de sécurité, par cryptage et/ou détrompage spécifique au montage du bloc 6 sur le corps du robinet 1. C'est-à-dire que l'inter-opérabilité du bloc 6 sur le robinet 1 est fonction de la nature du gaz et/ou du débit et/ou de la pression visée pour l'application.

Dans une variante possible le dispositif comporte une fonction d'ouverture/fermeture automatique du circuit gaz. C'est-à-dire que la connexion du bloc 6 sur le robinet 1 via un raccord rapide ou semi-rapide déclenche l'ouverture du circuit contrôlée au niveau du bloc 6.

Selon une autre particularité possible, le bloc intègre un organe de verrouillage assurant un système anti-vol ou simplement un blocage du bloc 6 sur le robinet 1 pendant l'utilisation ou le transport de l'ensemble assemblé.

Selon une autre particularité possible, le bloc 6 fonctionnel comporte un organe de limitation de débit, pour limiter les risques dans au cas où, par exemple, le tuyau 121 aval serait sectionné.

De même, le bloc 6 fonctionnel peut comporter un organe de sécurité tel qu'un disque de rupture et/ou un fusible thermique, pour protéger la sortie de gaz du bloc en cas de dysfonctionnement de la 1^{ère} et/ou de la 2^{ème} détente ou d'une élévation anormale de la température autour du dispositif.

Lors de la connexion du bloc 6 fonctionnel sur le robinet 1 monté sur la bouteille 15, l'ensemble complet de détente peut être complètement intégré dans le volume de protection d'un chapeau de protection.

De préférence, les blocs 6 sont choisis en fonction des utilisations et se connectent au robinet 1 via une connexion semi-rapide (c'est-à-dire dans laquelle la connexion mécanique étanche est découplée de l'ouverture du circuit de gaz). Bien entendu, un raccord vissé couramment utilisé peut également être utilisé.

Selon les besoins, l'utilisateur peut choisir de connecter/déconnecter le bloc 6 fonctionnel de détente du robinet 1. Très simplement il peut alors raccorder ce même bloc 6 de détente sur le robinet 1 d'une autre bouteille de gaz.

Le transport de la bouteille de gaz et du dispositif complet (robinet 1 de première détente et bloc 6 de détente supplémentaire) est facilité, le bloc 6 de détente pouvant rester connecté au robinet 1 sans dépasser d'un chapeau de protection.

Dans les exemples décrits ci-dessus le bloc 6 fonctionnel est connecté verticalement sur le robinet 1. Bien entendu il peut également être envisagé une connexion horizontale ou selon un autre angle déterminé.

Bien entendu, de préférence, un détendeur ou tout autre organe (standard ou non) peut être connecté à la seconde extrémité 12 du robinet, directement ou via un adaptateur.

C'est-à-dire que, comme décrit ci-dessus, un bloc fonctionnel tel qu'un détendeur et/ou un régulateur de débit spécialement prévu à cet effet peut être connecté directement à la seconde extrémité 12 du robinet.

De même, un bloc fonctionnel tel qu'un détendeur et/ou un régulateur de débit spécialement prévu à cet effet peut être connecté indirectement à la seconde extrémité 12 du robinet, c'est-à-dire via un bloc adaptateur (par exemple via un simple raccord adaptateur).

De même, on peut envisager qu'un bloc fonctionnel standard connu en soit tel qu'un détendeur et/ou un régulateur de débit peut être connecté indirectement à la seconde extrémité 12 du robinet, c'est-à-dire via un bloc adaptateur (par exemple via un simple raccord adaptateur). Dans ce cas, le levier 3 coopère sélectivement en accrochage avec le bloc adaptateur et/ou avec le bloc fonctionnel standard raccordé à l'adaptateur comme décrit ci-dessus.

On peut même envisager une variante dans laquelle un bloc fonctionnel standard connu en soit tel qu'un détendeur et/ou un régulateur de débit peut être connecté directement à la seconde extrémité 12 du robinet, c'est-à-dire via sans raccord adaptateur. Dans ce cas, le levier 3 coopère sélectivement en accrochage avec le bloc fonctionnel standard comme décrit ci-dessus.

L'invention peut s'appliquer aux conditionnements sous pression de gaz comprimés ou liquéfiés ou dissous nécessitant un système de détente pour leur utilisation.

Bien entendu, l'invention n'est pas limitée à l'exemple décrit ci-dessus. Ainsi, en particulier, la position de « verrouillage fermé » décrite ci-dessus peut être supprimée dans l'exemple précédent. C'est-à-dire que le levier 3 est déplaçable dans ce cas entre deux positions stables (au lieu de trois) : une première position de repos (clapet 2 d'obturation fermé) et une seconde position dans laquelle le levier 3 verrouille mécaniquement le bloc 6 fonctionnel sur le robinet 1 et ouvre le clapet 2 d'obturation.

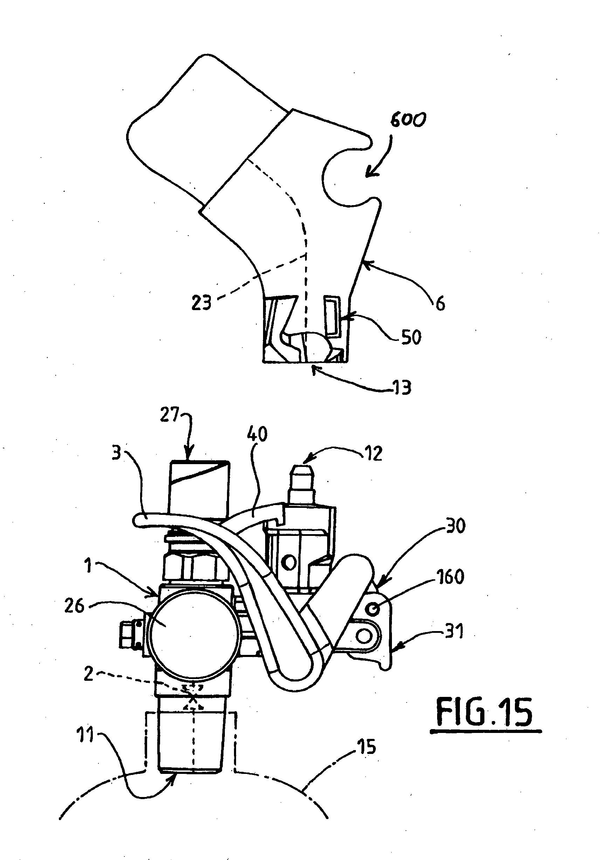

Les figures 15 à 20 illustrent également un autre mode de réalisation possible. Par soucis de concision, les éléments identiques à ceux décrits ci-dessus sont désignés par les mêmes références numériques et ne sont décrits en détail une seconde fois. Par ailleurs, tout ou partie des structures internes du robinet 1 et du bloc 6 fonctionnel décrits ci-dessus peuvent s'appliquer à la variante des figures 15 à 20 (notamment en ce qui concerne les organes interne tels que le clapet 2 d'obturation, le détendeur 7, les organes fonctionnels 21, 22...).

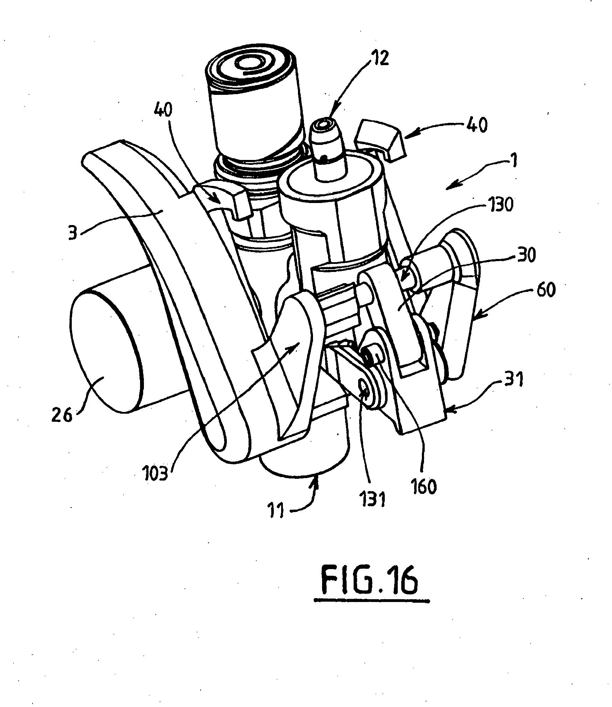

Comme illustré aux figures 15 et 16, le bloc 6 fonctionnel n'est pas monté sur le robinet 1. Le clapet 2 d'obturation du robinet 1 est fermé et le levier 3 est dans une première position dite « de repos ». C'est-à-dire que la configuration de la figure 15 correspond sensiblement à la configuration de la figure 1.

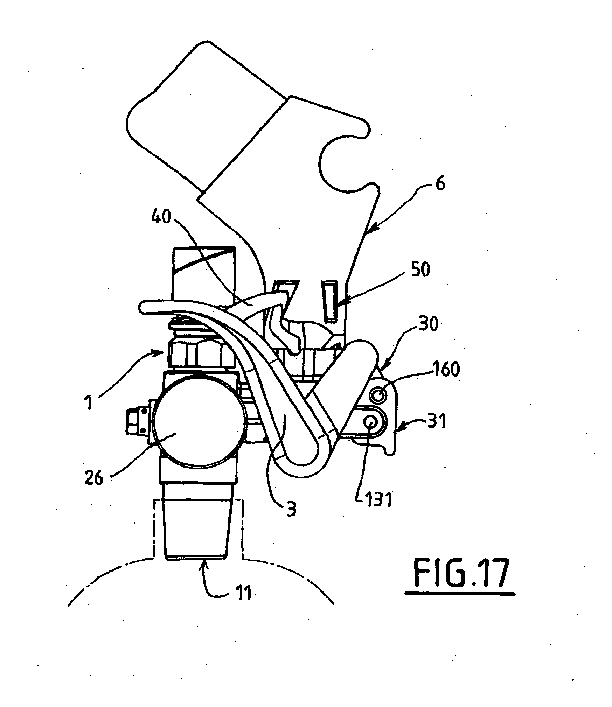

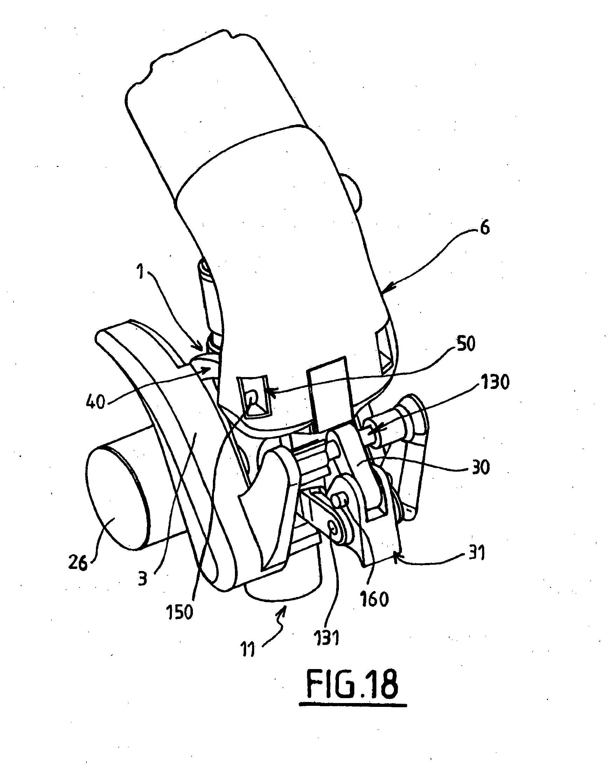

Les figures 17 et 18 illustrent le même dispositif avec cette fois, le bloc 6 fonctionnel monté sur le robinet 1. Le levier 3 est toujours dans sa première position de repos. Le levier 3 n'est pas accroché sur le bloc 6 fonctionnel (pas de verrouillage mécanique du bloc 6 fonctionnel sur le robinet 1) et le clapet 2 d'obturation est fermé.

Le levier 3 comporte deux saillies 40 ayant chacune une forme de crochet et le bloc 6 fonctionnel comporte deux logements 50 destinés à accueillir respectivement les deux saillies 40 en forme de crochet. Chaque logement 50 comprend de préférence une zone d'attache sélective du crochet 40, par exemple un axe 150 (cf. figure 18 où un axe est visible). Dans la configuration des figures 17 et 18, les crochets 40 ne sont pas accrochés à leur zone d'attache respective du bloc 6 fonctionnel. C'est-à-dire que le bloc 6 fonctionnel monté sur le robinet 1 peut être séparé du robinet en le tirant verticalement.

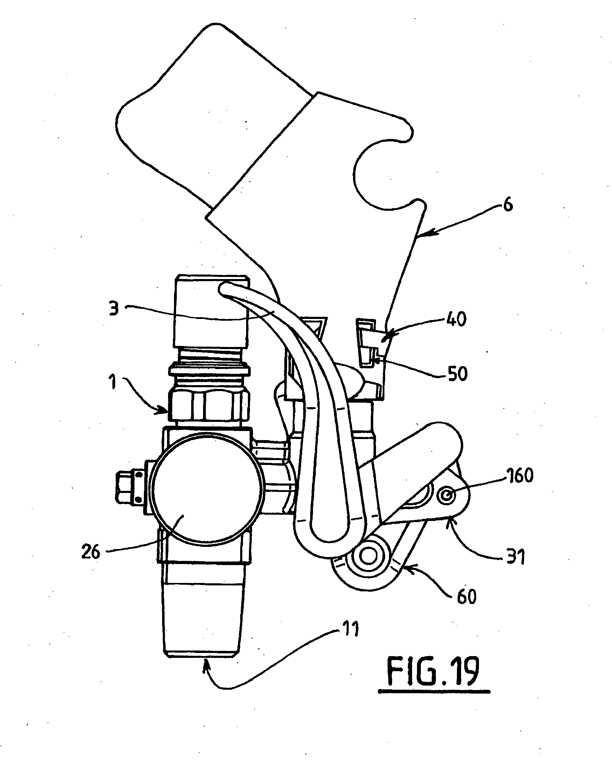

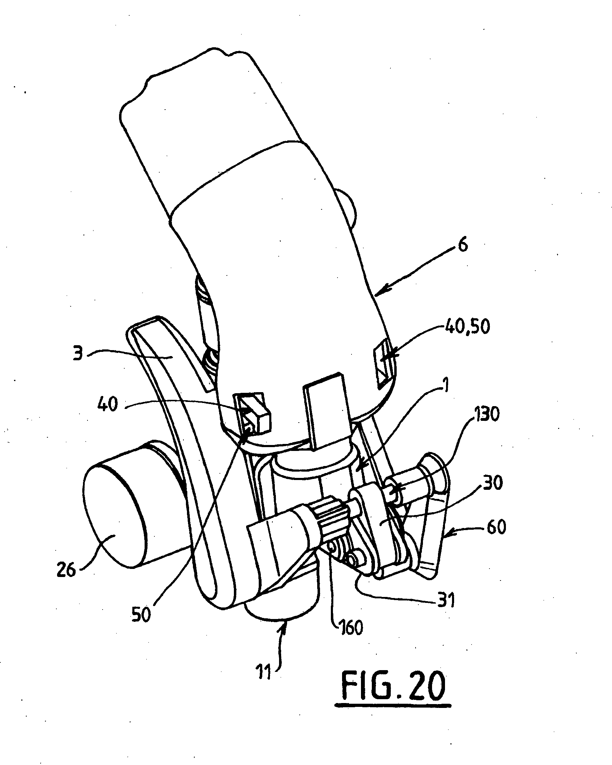

Dans la configuration des figures 19 et 20, et par rapport à la configuration des figures 17 et 18, le levier 3 a été pivoté vers une seconde position (pivotement dans le sens horaire à la figure 19) dans laquelle les crochets 40 accrochent mécaniquement le bloc 6 fonctionnel (au niveau par exemple des axes 150). Dans cette seconde position, de préférence stable, le levier 3 actionne l'ouverture du clapet 2 d'obturation. Cette configuration correspond sensiblement à la position de verrouillage ouvert du précédent mode de réalisation. Dans cette configuration, le bloc 6 fonctionnel ne peut être séparé physiquement du robinet 1.

Comme illustré, le dispositif et notamment le robinet 1 peut comporter un mécanisme de démultiplication de l'effort du levier 3 vers le clapet 2. C'est-à-dire que le robinet 1 comporte un mécanisme de démultiplication de l'effort interposé entre le levier 3 et le clapet 2 d'obturation.

Comme illustré, le mécanisme de démultiplication de l'effort peut comprendre un pivot 30 intermédiaire articulé d'une part sur le levier 3 et, d'autre part, sur une came 31 d'actionnement distincte du corps du levier 3. La came 31 d'actionnement actionne sélectivement directement (ou indirectement cf. figure 7) l'élément mobile du clapet 2 d'obturation.

La came 31 d'actionnement est par exemple articulée également sur le robinet 1 et comprend une extrémité formant une portion d'actionnement sélectif de l'élément mobile du clapet 2 (directement et/ou indirectement via au moins une pièce 18 mobile de transmission d'effort comme illustré à la figure 7).

Comme illustré à titre d'exemple, en plus d'être articulé sur une partie fixe du robinet 1, le levier 3 est articulé également sur une première extrémité du pivot 30 via un premier axe 130 d'articulation. Les extrémités du premier axe 130 d'articulation sont solidaires respectivement d'une première platine 103 et d'une seconde 60 platine solidaires du levier 3. La première extrémité du pivot 30 est par exemple articulée sur le premier axe 130 d'articulation entre les deux platines 103, 60.

Une seconde extrémité du pivot 30 est articulée sur la came 31 d'actionnement via un second axe 160 d'articulation solidaire de la came 31. Le second axe 160 d'articulation est de préférence monté entre deux flasques parallèles formés par la came 31. Les deux flasques définissent un logement dans laquelle est logée la seconde extrémité du pivot 30 et autorisant une rotation du pivot relativement à la came 31.

Enfin, une autre extrémité de la came 31 est articulée sur le robinet 1 fixe, par exemple sur un axe 131 monté entre deux pattes parallèles et solidaires du corps du robinet 1.

Comme illustré aux figures, lors de l'actionnement du levier 3 de la première position (figure 17) vers la seconde position (figure 19), la came 31 est pivotée via le pivot 30 qui forme un démultiplicateur d'effort, à la façon d'un bras de levier. L'effort transmis au clapet 2 d'obturation s'en trouve augmenté.

On conçoit donc aisément que la variante de réalisation des figures 15 à 20 permet de proposer un robinet à clapet 2 actionné par un levier dans un volume très compact, sans nuire à l'ergonomie, notamment sur la facilité d'actionnement du levier 3.

Cette configuration procure de nombreux avantages parmi lesquels :
= une meilleure protection du levier dans un chapeau de protection car le levier se trouve intégré au plus près du corps du robinet,
   - la position du levier est visible à distance (position d'ouverture ou de fermeture du clapet),
   - il est possible de conserver un même sens de rotation du levier pour commander l'ouverture du clapet par rapports aux solutions déjà commercialisées, c'est-à-dire que le levier est dans le volume du chapeau en position de fermeture du clapet et fait saillie en dehors du chapeau en position d'ouverture du clapet,

Comme illustré à la figure 15 notamment, le robinet peut comporter un manomètre 26 d'indication de la pression en amont et/ou en aval du clapet 2 d'obturation et un raccord 27 de remplissage du réservoir.

Comme visible à la figure 15 notamment, le corps du bloc fonctionnel peut comporter une ouverture 600 ou découpe prévue pour permettre d'accueillir une barre telle qu'une armature d'un chariot à roulette de transport d'au moins une bouteille de fluide sous pression. L'ouverture permet l'accrochage du bloc fonctionnel sur une armature fixe.

Bien entendu, le mécanisme de démultiplication d'effort du levier 3 peut être indépendant du système d'accrochage sélectif du levier 3 avec un bloc 6 fonctionnel. C'est-à-dire que le mécanisme de démultiplication d'effort du levier 3 peut être appliqué à un robinet qui n'est pas forcément adapté à coopérer avec un bloc fonctionnel comme décrit ci-dessus. A cet effet, l'invention peut concerner un robinet définissant un circuit interne de gaz entre une première extrémité destinée à être reliée à l'ouverture d'un réservoir de gaz sous pression et une seconde extrémité destinée à être raccordée à un organe utilisateur, le robinet comprenant un détendeur de pression à une valeur fixe ou réglable, un circuit de remplissage, un clapet d'obturation sélective du circuit de gaz et un organe de manoeuvre monté pivotant sur le robinet pour commander sélectivement l'ouverture du clapet d'obturation, l'organe de manoeuvre pouvant être pivoté manuellement entre une première position dans laquelle l'organe de manoeuvre ne sollicite pas le clapet d'obturation vers sa position d'ouverture et une seconde position dans laquelle l'organe de manoeuvre sollicite le clapet d'obturation vers sa position d'ouverture, le robinet comprenant un mécanisme de démultiplication de l'effort de l'organe de manoeuvre vers le clapet d'obturation.

## Revendications

1. Ensemble de réservoir (15) de gaz sous pression, notamment bouteille de gaz sous pression, comportant un dispositif de contrôle d'un flux de gaz comprenant un robinet (1) définissant un circuit interne de gaz entre une première extrémité (11) destinée à être reliée à l'ouverture du réservoir (15) de gaz sous pression et une seconde extrémité (12) destinée à être raccordée à un organe utilisateur ou à un bloc (6) fonctionnel de contrôle du flux de gaz, le robinet (1) comprenant un détendeur de pression à une valeur fixe ou réglable, un circuit de remplissage, un clapet. (2) d'obturation sélective du circuit de gaz et un organe (3) de manoeuvre monté pivotant sur le robinet (1) pour commander sélectivement l'ouverture du clapet (2) d'obturation, le dispositif comprenant un bloc (6) fonctionnel sélectivement connectable à la seconde extrémité (12) du robinet (1), le bloc (6) fonctionnel comprenant un passage (23) de gaz interne, le passage (23) interne du bloc (6) fonctionnel comprenant une extrémité (13) amont destinée à être raccordée fluidiquement avec la seconde extrémité (12) du circuit de gaz du robinet (1), le bloc fonctionnel comprenant au moins l'un des organes de contrôle de flux de gaz parmi : un détendeur de pression à une valeur fixe ou réglable, un clapet tel qu'une vanne d'isolement, un régulateur de débit fixe ou réglable, **caractérisé en ce que**, lorsque le bloc (6) fonctionnel est connecté à la seconde extrémité (12) du robinet (1), l'organe (3) de manoeuvre peut être pivoté manuellement entre une première position dans laquelle l'organe (3) de manoeuvre ne coopère pas en accrochage avec le bloc (6) fonctionnel et une seconde position dans laquelle l'organe (3) de manoeuvre coopère mécaniquement en accrochage avec le bloc (6) fonctionnel pour s'opposer à la séparation du bloc (6) de la seconde extrémité (12) du robinet (1), dans sa première position l'organe (3) de manoeuvre ne sollicitant pas le clapet (2) d'obturation vers sa position d'ouverture.

2. Ensemble de réservoir selon la revendication 1, **caractérisé en ce que**, dans sa seconde position, qui est dite « de verrouillage,», l'organe (3) de manoeuvre sollicite le clapet (2) d'obturation vers sa position d'ouverture.

3. Ensemble de réservoir selon l'une quelconque des revendications 1 ou 2, **caractérisé en ce que** l'organe (3) de manoeuvre comporte au moins un logement (4), ou, respectivement, au moins une saillie (40) et le bloc (6) fonctionnel comporte au moins une saillie (5), respectivement au moins un logement (50), les saillie(s) (5, 40) et logement(s) (4, 50) étant destiné(s) à coopérer sélectivement en accrochage selon la position de l'organe (3) de manoeuvre par rapport au bloc (6).

4. Ensemble de réservoir selon la revendication 3, **caractérisé en ce que** la au moins une saillie (40) comporte un crochet, le au moins un logement (50) comprenant une portion d'attache sélective du crochet (40).

5. Ensemble de réservoir selon l'une quelconque des revendications 1 à 4, **caractérisé en ce que** l'organe (3) de manoeuvre comporte deux saillies (40) chacune en forme de crochet et le bloc (6) fonctionnel comporte deux logements (50) destinés à accueillir respectivement les deux saillies (40) en forme de crochet, chaque logement (50) comprenant une zone d'attache sélective du crochet (40).

6. Ensemble de réservoir selon l'une quelconque des revendications 1 à 5, **caractérisé en ce que** le clapet (2) d'obturation comprend un élément (9) mobile sollicité vers une position fermée contre un siège (12) fixe via un organe (10) de rappel tel qu'un ressort.

7. Ensemble de réservoir selon la revendication 6, **caractérisé en ce que** l'organe (3) de manoeuvre comprend une portion d'actionnement sélectif de l'élément (9) mobile du clapet directement et/ou indirectement via au moins une pièce (18) mobile de transmission d'effort.

8. Ensemble de réservoir selon l'une quelconque des revendications 6 ou 7, **caractérisé en ce que** l'organe (3) de manoeuvre comprend une portion d'actionnement sélectif de l'élément (9) mobile du clapet via un mécanisme (30, 31) de démultiplication de l'effort de l'organe (3) de manoeuvre vers l'élément mobile (9) du clapet.

9. Ensemble de réservoir selon la revendications 8, **caractérisé en ce que** le mécanisme (30, 31) de démultiplication de l'effort de l'organe (3) de manoeuvre comprend un pivot (30) intermédiaire articulé d'une part sur l'organe (3) de manoeuvre et, d'autre part, sur une came (31) d'actionnement, la came (3) d'actionnement étant articulée également sur le robinet (1) et comprenant une extrémité formant une portion d'actionnement sélectif de l'élément (9) mobile du clapet directement et/ou indirectement via au moins une pièce (18) mobile de transmission d'effort.

10. Ensemble de réservoir selon la revendication 9, **caractérisé en ce qu'**une première extrémité du pivot (30) est articulée sur l'organe (3) de manoeuvre via un premier axe (130) d'articulation, les deux extrémités du premier axe (130) d'articulation étant solidaires respectivement d'une première platine (103) et d'une seconde (60) platine dont au moins la première platine (103) est solidaire de l'organe (3) de manoeuvre, la première extrémité du pivot (30) étant articulé sur le premier axe (130) d'articulation entre lesdites platines (103, 60).

11. Ensemble de réservoir selon la revendication 10, **caractérisé en ce que** une seconde extrémité du pivot (30) est articulée sur la came (3) d'actionnement via un second axe (160) d'articulation solidaire de la came (31), le second axe (160) d'articulation étant monté entre deux flasques parallèles de la came (31), les deux flasques définissant un logement dans laquelle est logée la seconde extrémité du pivot (30).

12. Ensemble de réservoir selon l'une quelconque des revendications 1 à 11, **caractérisé en ce que** l'organe (3) de manoeuvre comprend un levier articulé sur le corps du robinet (1).

13. Ensemble de réservoir selon l'une quelconque des revendications 1 à 12, **caractérisé en ce que** l'organe (3) de manoeuvre est sollicité par défaut vers sa première position par un organe (20) de rappel.

14. Ensemble de réservoir selon l'une quelconque des revendications 1 à, 13, **caractérisé en ce qu'**il comprend un bloc fonctionnel adaptateur comprenant une première extrémité connectable directement à la seconde extrémité (12) du robinet (1) et une seconde extrémité destinée à être raccordée à un appareil utilisateur et/ou à un bloc (6) fonctionnel supplémentaire dont le passage (23) interne comprend au moins un organe (21, 22) de contrôle d'un flux de gaz, c'est-à-dire que le bloc (6) fonctionnel supplémentaire est connectable indirectement à la seconde extrémité (12) du robinet (1) via le bloc fonctionnel adaptateur.

15. Ensemble de réservoir selon la revendication 14, **caractérisé en ce que** l'organe (3) de manoeuvre coopère sélectivement en accrochage mécanique avec le bloc fonctionnel adaptateur et/ou avec le bloc fonctionnel (6) supplémentaire.

## Patentansprüche

1. Behälteranordnung (15) für unter Druck stehendes Gas, insbesondere Flasche für unter Druck stehendes Gas, mit einer Vorrichtung zur Regelung eines Gasflusses, die einen Schließhahn (1) umfasst, der einen internen Gaskreislauf zwischen einem ersten Ende (11), das für die Verbindung mit der Öffnung des Behälters (15) für unter Druck stehendes Gas bestimmt ist, und einem zweiten Ende (12), das für den Anschluss an ein Nutzungsorgan oder an einen Funktionsblock (6) zur Regelung des Gasflusses bestimmt ist, definiert, wobei der Schließhahn (1) Folgendes umfasst: ein Druckminderventil mit einem festen oder einstellbaren Wert, einen Fülkreislauf, ein Ventil (2) zum selektiven Sperren des Gaskreislaufs und ein Bedienorgan (3), das an dem Schließhahn (1) drehbar gelagert ist, um selektiv die Öffnung des Sperrventils (2) zu steuern, wobei die Vorrichtung einen Funktionsblock (6) umfasst, der selektiv an das zweite Ende (12) des Schließhahns (1) anschließbar ist, wobei der Funktionsblock (6) einen internen Gasdurchlass (23) umfasst, wobei der interne Durchlass (23) des Funktionsblocks (6) ein stromaufwärts befindliches Ende (13) umfasst, das dafür bestimmt ist, mit dem zweiten Ende (12) des Gaskreislaufs des Schließhahns (1) fluidisch verbunden zu werden, wobei der Funktionsblock (6) mindestens eines der Organe zur Regelung des Gasflusses von Folgenden umfasst: ein Druckminderventil mit einem festen oder einstellbaren Wert, ein Ventil, wie ein Absperrventil, einen festen oder einstellbaren Durchflussbegrenzer, **dadurch gekennzeichnet, dass**, wenn der Funktionsblock (6) an das zweite Ende (12) des Schließhahns (1) angeschlossen ist, das Bedienorgan (3) manuell geschwenkt werden kann zwischen einer ersten Stellung, in der das Bedienorgan (3) mit dem Funktionsblock (6) nicht durch Einhaken zusammenwirkt, und einer zweiten Stellung, in der das Bedienorgan (3) mit dem Funktionsblock (6) durch Einhaken zusammenwirkt, um sich der Trennung des Blockes (6) von dem zweiten Ende (12) des Schließhahns (1) zu widersetzen, wobei das Bedienorgan (3) in seiner ersten Stellung das Sperrventil (2) nicht in seine Öffnungsstellung drückt.

2. Behälteranordnung nach Anspruch 1, **dadurch gekennzeichnet, dass** das Bedienorgan (3) in seiner zweiten Stellung, der so genannten "Verriegelungsstellung", das Sperrventil (2) in seine Öffnungsstellung drückt.

3. Behälteranordnung nach einem der Ansprüche 1 oder 2, **dadurch gekennzeichnet, dass** das Bedienorgan (3) mindestens eine Aufnahme (4) bzw. mindestens einen Vorsprung (40) aufweist und der Funktionsblock (6) mindestens einen Vorsprung (5) bzw. mindestens eine Aufnahme (50) aufweist, wobei der Vorsprung bzw. die Vorsprünge (5, 40) und die Aufnahme bzw. die Aufnahmen (4, 50) dafür bestimmt sind, je nach Stellung des Bedienorgans (3) relativ zu dem Block (6) durch Einhaken selektiv zusammenzuwirken.

4. Behälteranordnung nach Anspruch 3, **dadurch gekennzeichnet, dass** der mindestens eine Vorsprung (40) einen Haken aufweist, wobei die mindestens eine Aufnahme (50) ein Teil zum selektiven Befestigen des Hakens (40) umfasst.

5. Behälteranordnung nach einem der Ansprüche 1 bis 4, **dadurch gekennzeichnet, dass** das Bedienorgan (3) zwei jeweils hakenförmige Vorsprünge (40) aufweist und der Funktionsblock (6) zwei Sitze (50) aufweist, die jeweils für die Aufnahme der zwei hakenförmigen Vorsprünge (40) bestimmt sind, wobei jede Aufnahme (50) eine Zone zum selektiven Befestigen des Hakens (40) umfasst.

6. Behälteranordnung nach einem der Ansprüche 1 bis 5, **dadurch gekennzeichnet, dass** das Sperrventil (2) ein bewegliches Element (9) umfasst, das über ein Rückstellorgan (10) wie eine Feder in eine geschlossene Stellung gegen einen ortsfesten Sitz (12) gedrückt wird.

7. Behälteranordnung nach Anspruch 6, **dadurch gekennzeichnet, dass** das Bedienorgan (3) ein Teil zum selektiven Betätigen des mobilen Elements (9) des Ventils direkt und/oder indirekt über mindestens ein bewegliches Kraftübertragungsteil (18) umfasst.

8. Behälteranordnung nach einem der Ansprüche 6 oder 7, **dadurch gekennzeichnet, dass** das Bedienorgan (3) ein Teil zum selektiven Betätigen des mobilen Elements (8) des Ventils über einen Mechanismus (30, 31) zur Übersetzung der Kraft des Bedienorgans (3) in Richtung des beweglichen Elements (9) des Ventils umfasst.

9. Behälteranordnung nach Anspruch 8, **dadurch gekennzeichnet, dass** der Mechanismus (30, 31) zur Übersetzung der Kraft des Bedienorgans (3) einen Zwischenzapfen (30) umfasst, der einerseits an dem Bedienorgan (3) und andererseits an einem Betätigungsnocken (31) angelenkt ist, wobei der Betätigungsnocken (3) auch an dem Schließhahn (1) angelenkt ist und ein Ende umfasst, das ein Teil zum selektiven Betätigen des mobilen Elements (9) des Ventils direkt und/oder indirekt über mindestens ein bewegliches Kraftübertragungsteil (18) bildet.

10. Behälteranordnung nach Anspruch 9, **dadurch gekennzeichnet, dass** ein erstes Ende des Zapfens (30) über eine erste Gelenkachse (130) an dem Bedienorgan (3) angelenkt ist, wobei die zwei Enden der ersten Gelenkachse (130) mit einer ersten Platte (103) bzw. mit einer zweiten Platte (60) verbunden sind, von denen mindestens die erste Platte (103) mit dem Bedienorgan (3) fest verbunden ist, wobei das erste Ende des Zapfens (30) an der ersten Gelenkachse (130) zwischen den Platten (103, 60) angelenkt ist.

11. Behälteranordnung nach Anspruch 10, **dadurch gekennzeichnet, dass** ein zweites Ende des Zapfens (30) an dem Betätigungsnocken (3) über eine zweite Gelenkachse (130), die mit dem Nocken (31) fest verbunden ist, angelenkt ist, wobei die zweite Gelenkachse (160) zwischen zwei parallelen Schilden des Nockens (31) gelagert ist, wobei die zwei Schilde eine Aufnahme definieren, in der das zweite Ende des Zapfens (30) angeordnet ist.

12. Behälteranordnung nach einem der Ansprüche 1 bis 11, **dadurch gekennzeichnet, dass** das Bedienorgan (3) einen Hebel umfasst, der an den Körper des Schließhahns (1) angelenkt ist.

13. Behälteranordnung nach einem der Ansprüche 1 bis 12, **dadurch gekennzeichnet, dass** das Bedienorgan (3) durch ein Rückstellorgan (20) standardmäßig in seine erste Stellung gedrückt wird.

14. Behälteranordnung nach einem der Ansprüche 1 bis 13, **dadurch gekennzeichnet, dass** sie einen Adapter-Funktionsblock umfasst, der ein erstes Ende umfasst, das direkt mit dem zweiten Ende (12) des Schließhahns (1) verbunden werden kann, und ein zweites Ende umfasst, das für den Anschluss an ein Benutzergerät und/oder an einen Funktionsblock (6) bestimmt ist, dessen interner Durchlass (23) mindestens ein Organ (21, 22) zur Regelung eines Gasflusses umfasst, das heißt, dass der zusätzliche Funktionsblock über den Adapter-Funktionsblock indirekt mit dem zweiten Ende (12) des Schließhahns (1) verbunden werden kann.

15. Behälteranordnung nach Anspruch 14, **dadurch gekennzeichnet, dass** das Bedienorgan (3) selektiv mit dem Adapter-Funktionsblock und/oder mit dem zusätzlichen Funktionsblock (6) durch mechanisches Einhaken zusammenwirkt.

## Claims

1. Pressurised gas tank assembly (15), in particular, a pressurised gas cylinder, comprising a device for controlling a gas stream, comprising a tap (1) defining an inner gas circuit between a first end (11) intended to be connected to the opening of the pressurised gas tank (15) and a second end (12) intended to be connected to a user member or a functional unit (6) for controlling the gas stream, the tap (1) comprising a pressure-reducing valve having a fixed or variable value, a filling circuit, a selective non-return valve (2) of the gas circuit and an actuating member (3) pivotally mounted on the tap (1) for selectively operating the opening of the non-return valve (2), the device comprising a functional unit (6) which can be selectively connected to the second end (12) of the tap (1), the functional unit (6) comprising an inner gas passage (23), the inner passage (23) of the functional unit (6) comprising an upstream end (13) intended to be fluidically connected to the second end (12) of the gas circuit of the tap (1), the functional unit comprising at least one of the following gas stream control members: a pressure-reducing valve having a fixed or variable value, a valve such as an isolating valve, a fixed or variable flow regulator, **characterised in that**, when the functional unit (6) is connected to the second end (12) of the tap (1), the actuating member (3) can be manually pivoted between a first position in which the actuating member (3) does not cooperate with the functional unit (6) by hooking and a second position in which the actuating member (3) mechanically cooperates with the functional unit (6) by hooking, in order to oppose the separation of the unit (6) from the second end (12) of the tap (1), the actuating member (3) not urging the non-return valve (2) towards the open position thereof, in the first position of the actuating member.

2. Tank assembly according to claim 1, **characterised in that** the actuating member (3) urges the non-return valve (2) towards the open position thereof, in the second position of the actuating member, called the "locking" position.

3. Tank assembly according to either claim 1 or claim 2, **characterised in that** the actuating member (3) comprises at least one recess (4), or, respectively, at least one projection (40), and the functional unit (6) comprises at least one projection (5), respectively at least one recess (50), the projection(s) (5, 40) and recess(es) (4, 50) being intended to cooperate selectively by hooking, according to the position of the actuating member (3) in relation to the unit (6).

4. Tank assembly according to claim 3, **characterised in that** the at least one projection (40) comprises a hook, the at least one recess (50) comprising a selective attachment portion of the hook (40).

5. Tank assembly according to any of claims 1 to 4, **characterised in that** the actuating member (3) comprises two projections (40) each in the form of a hook, and the functional unit (6) comprises two recesses (50) intended to respectively receive the two projections (40) in the form of a hook, each recess (50) comprising a selective attachment region of the hook (40).

6. Tank assembly according to any of claims 1 to 5, **characterised in that** the non-return valve (2) comprises a movable element (9), urged towards a closed position against a fixed seat (12) by means of a return member (10) such as a spring.

7. Tank assembly according to claim 6, **characterised in that** the actuating member (3) comprises a portion for selective actuation of the movable element (9) of the valve directly and/or indirectly by means of at least one movable part (18) for transmitting force.

8. Tank assembly according to either claim 6 or claim 7, **characterised in that** the actuating member (3) comprises a portion for selective actuation of the movable element (9) of the valve, by means of a force reduction mechanism (30, 31) of the actuating member (3), towards the movable element (9) of the valve.

9. Tank assembly according to claim 8, **characterised in that** the force reduction mechanism (30, 31) of the actuating member (3) comprises an intermediate pivot (30) articulated on the one hand on the actuating member (3), and on the other hand on an actuation cam (31), the actuation cam (3) also being articulated on the tap (1) and comprising an end forming a portion for selective actuation of the movable element (9) of the valve directly and/or indirectly by means of at least one movable part (18) for transmitting force.

10. Tank assembly according to claim 9, **characterised in that** a first end of the pivot (30) is articulated on the actuating member (3) via a first articulation shaft (130), the two ends of the first articulation shaft (130) being rigidly connected to a first plate (103) and a second plate (60) respectively, of which at least the first plate (103) is rigidly connected to the actuating member (3), the first end of the pivot (30) being articulated on the first articulation shaft (130) between said plates (103, 60).

11. Tank assembly according to claim 10, **characterised in that** a second end of the pivot (30) is articulated on the actuation cam (3) by means of a second articulation shaft (160) rigidly connected to the cam (31), the second articulation shaft (160) being mounted between two parallel flanges of the cam (31), the two flanges defining a recess in which the second end of the pivot (30) is accommodated.

12. Tank assembly according to any of claims 1 to 11, **characterised in that** the actuating member (3) comprises a lever articulated on the body of the tap (1).

13. Tank assembly according to any of claims 1 to 12, **characterised in that** the actuating member (3) is urged by default towards the first position thereof by a return member (20).

14. Tank assembly according to any of claims 1 to 13, **characterised in that** it comprises an adapter functional unit comprising a first end which can be connected directly to the second end (12) of the tap (1) and a second end intended to be connected to a user device and/or to an additional functional unit (6), the inner passage (23) of which comprises at least one member (21, 22) for controlling a gas stream, i.e. the additional functional unit (6) can be connected indirectly to the second end (12) of the tap (1) by means of the adapter functional unit.

15. Tank assembly according to claim 14, **characterised in that** the actuating member (3) cooperates selectively with the adapter functional unit and/or with the additional functional unit (6) by mechanical hooking.
